# EUROPÄISCHE PATENTANMELDUNG

(11) **EP 1 205 277 A2**
(43) Veröffentlichungstag der Anmeldung: **15.05.2002**
(21) Anmeldenummer: 01120837.8
(22) Anmeldetag: 30.08.2001
(51) Int. Cl.: B23Q 11/00, B23Q 1/62, B23Q 1/01

(54) **Werkzeugmaschine, insbesondere Hochgeschwindigkeits-Bearbeitungszentrum**

(30) Priorität: 08.11.2000 DE 20019035 U
(71) Anmelder: Waldrich Siegen Werkzeugmaschinen GmbH, 57299 Burbach (DE)
(72) Erfinder: Haferkorn, Wolfgang, 60322 Frankfurt (DE)
(74) Vertreter: Valentin, Ekkehard, Dipl.-Ing.

(57) **Zusammenfassung**

Bei einer Werkzeugmaschine, insbesondere Hochgeschwindigkeits-Bearbeitungszentrum, zum spanabhebenden Bearbeiten von Werkstücken, insbesondere zum Fräsen von Konturen, umfassend einen in X-Richtung hin und her verfahrbaren Querbalken, einen von diesem getragenen, in Y-Richtung quer dazu verfahrbaren Schlitten und einen in dem Schlitten in Z-Richtung, d.h. senkrecht auf- und abbeweglichen Schieber (5), der an seinem unteren Ende mit dem Werkstück (6) bestückt ist, ist das Werkzeug (6) verschwenkbar in einer sich um eine Drehachse (9) in Hauptverfahrrichtung (X-Richtung) verstellenden Aufnahmeeinheit (8) mit seinem Schwerpunkt (14) im Drehpunkt (13) seiner Schwenkachse (11) liegend angeordnet.

## Beschreibung

Die Erfindung betrifft eine Werkzeugmaschine, insbesondere Hochgeschwindigkeits-Bearbeitungszentrum, zum spanabhebenden Bearbeiten von Werkstücken, insbesondere zum Fräsen von Konturen, umfassend einen in X-Richtung hin und her verfahrbaren Querbalken, einen von diesem getragenen, in Y-Richtung quer dazu verfahrbaren Schlitten und einen in dem Schlitten in Z-Richtung, d.h. senkrecht auf- und abbeweglichen Schieber, der an seinem unteren Ende mit dem Werkzeug bestückt ist.

Vor allem bei der Bearbeitung von Konturen in Bauteilen bzw. Werkstücken treten sprunghafte Beschleunigungen auf, die um so problematischer werden, je größer eine Werkzeugmaschine und damit einhergehend die Masse der zu beschleunigenden Bewegungsteile wird. Durch die Behaarungskräfte der beschleunigten Massen kommt es zu Eigenverformungen der Maschine, wobei kurzzeitige hohe Beschleunigungen dazu führen, daß die Maschinenteile in ihrer Eigenfrequenz angeregt werden und nachschwingen. Hiervon bedingt stellen sich Beschädigungen bzw. Ungenauigkeiten an der herzustellenden bzw. zu fräsenden Bahn der Kontur des Werkstückes ein. Wenn nämlich der Querbalken mit einer hohen Beschleunigung beaufschlagt wird, verformt bzw. lenkt sich der Schieber in der Hauptverfahrrichtung aus. Bei Beendigung der Beschleunigungsphase wird der Schieber nicht sofort in seine Ausgangslage zurückgehen, sondern vielmehr überschwingen und dies je nach Dämpfung mehrmals wiederholen. Um den sich hieraus für die Qualität des zu bearbeitenden Werkstückes ergebenden Ungenauigkeiten zu begegnen ist es bekannt, die Verbiegung bzw. Auslenkung von vornherein als Bahnkorrektur in die Maschinensteuerung einzugeben.

Der Erfindung liegt daher die Aufgabe zugrunde, bei einer Werkzeugmaschine der eingangs genannten Art eine verbesserte Betriebsweise zu ermöglichen, insbesondere auf hohe Beschleunigungen zurückzuführende Bearbeitungsungenauigkeiten zu vermeiden.

Diese Aufgabe wird erfindungsgemäß dadurch gelöst, daß das Werkzeug verschwenkbar in einer sich um eine Drehachse in Hauptverfahrrichtung verstellenden Aufnahmeeinheit, vorzugsweise ausgebildet als Gabelkopf, mit seinem Schwerpunkt im Drehpunkt seiner Schwenkachse liegend angeordnet ist. Hiermit läßt sich erreichen, daß die Teile der Werkzeugmaschine, die eine große Masse haben (wie der Querbalken mit dem Schlitten), sich mit nur kleinen Beschleunigungen von beispielsweise 1 bis 2 m/s² fahren lassen, während hingegen die in unmittelbarer Nähe des Werkzeuges geschaffene kleine Schwenkachse mit wenig Masse eine hierzu überlagerte Bewegung ausführen kann. Hierbei bringt die Maßnahme, daß die Schwenkachse des Werkzeugs ihren Drehpunkt genau im Massenschwerpunkt aufweist den weiteren Vorteil mit sich, daß Störkräfte minimiert werden, weil auf den Schieber keine Kraft aufgebaut wird; die Kräfte heben sich vielmehr auf. Weiterhin können selbst für Beschleunigungen von größer 1g serienmäßige Antriebe eingesetzt werden, denn die Masse der zu beschleunigenden Aufnahmeeinheit bzw. des Gabelkopfes ist sehr gering. Hingegen müßten bei vergleichbar hohen Beschleunigungen des gesamten Querbalkens Sonderantriebe zum Einsatz kommen, da für die zu bewegenden großen Massen ein Serienprodukt kaum zur Verfügung steht.

Ein vorteilhafter Vorschlag der Erfindung sieht vor, daß dem senkrecht zu beschleunigenden Schieber ein Gewichtsausgleich zugeordnet ist. Dieser läßt sich vorteilhaft aus zwei gegenläufig zu den Schieberbewegungen arbeitenden, jeweils das halbe Gewicht des Schiebers - und damit zusammen die gleiche Masse wie dieser - besitzenden Ausgleichsmassen erreichen. Somit tritt trotz der in der Z-Richtung bzw. -Achse für den Schieber unverändert zu verwirklichenden hohen Beschleunigungen auf den Querbalken kein Kippmoment auf, weil sich die Kräfte der gegenläufig beschleunigten Massen gegenseitig ausgleichen.

Die Vermeidung von dynamisch bedingten Maßabweichungen bei nach wie vor hohen Beschleunigungen des Schiebers in Z-Richtung wird erfindungsgemäß dadurch unterstützt, daß die Ausgleichsmassen mit je einem Antriebsritzel des Schiebers kämmen. Sobald sich der Schieber in eine Richtung bewegt, leiten die spielfrei gelagerten Ritzel unverzüglich die gegenläufige Bewegung der Ausgleichsmassen ein. Jedes Antriebsritzel ist hierzu an einen von einem Getriebe untersetzten Motor angeschlossen.

Nach einer zweckmäßigen Ausgestaltung der Erfindung sind der Schieber und die Ausgleichsmassen pneumatisch gewichtsausgeglichen. Aufgrund dieser somit erreichten völligen Gewichtsentlastung dieser Bauteile läßt sich der Einfluß der Erdbeschleunigung, die sich den senkrechten Schieberbeschleunigungen überlagert, ausschalten. Diese Gewichtsentlastung läßt sich beispielsweise günstig dadurch erreichen, daß den Ausgleichmassen jeweils ein Pneumatikzylinder und dem Schieber zwei Pneumatikzylinder zugeordnet sind, die gegenläufig arbeiten und alle miteinander verbunden sind, so daß kein zusätzlicher Medienbedarf besteht, weil die Luft hin und her geschoben wird. Wenn sich der Schieber absenkt, wird die aus dessen Luftzylindern verdrängte Luft gegenläufig den Pneumatikzylindern der Ausgleichsmassen zugeführt.

Die Erfindung wird nachfolgend anhand von in den Zeichnungen schematisch dargestellten Ausführungsbeispielen näher erläutert. Es zeigen:
- Fig. 1: in perspektivischer Gesamtansicht eine Werkzeugmaschine mit ihren in X-, Z- und Y-Richtung bewegten Maschinenteilen;
- Fig. 2: als Einzelheit der Fig. 1 den in Z-Richtung vertikal bewegten Schieber mit daran unten angeordneter, dreh- und verschwenkbarer Werkzeug-Aufnahmeeinheit;
- Fig. 3: als schematische Gesamtansicht einen dem Schieber nach Fig. 2 zugeordneten Gewichtsausgleich; und
- Fig. 4: in vergrößerter schematischer Darstellung die Herstellung einer Werkstück-Kontur in mehreren Betriebspositionen mit Überlagerung der Beschleunigung des Querbalkens durch Schwenkbewegungen des Werkzeugs.

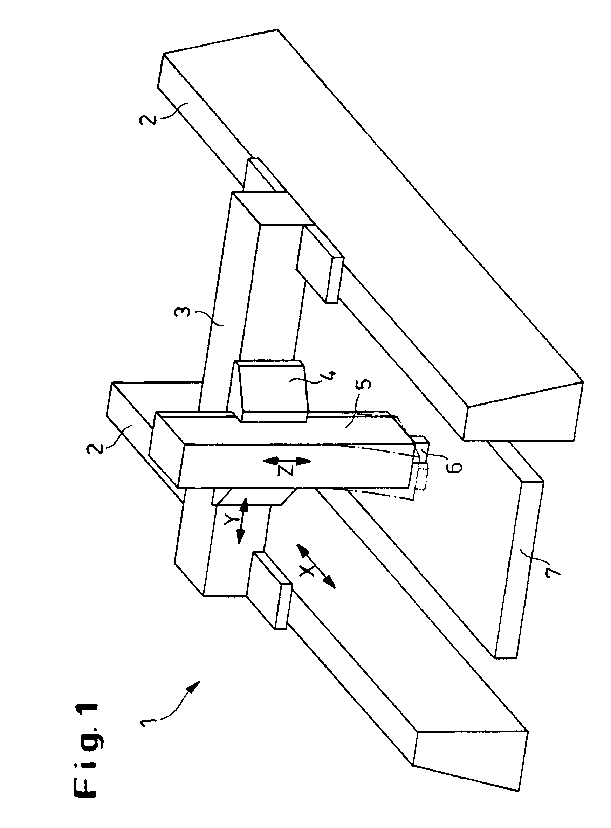

Von einer im wesentlichen lediglich in groben Zügen dargestellten Werkzeugmaschine 1 zeigt Fig. 1 einen auf Linearführungen 2 in der Hauptrichtung X verfahrbaren Querbalken 3. Dieser trägt einen dazu in Y-Richtung, d.h. quer verfahrbaren Schlitten 4, der seinerseits mit einem in Z-Richtung vertikal zu bewegenden bzw. zu beschleunigenden Schieber 5 versehen ist. Am unteren Ende des Schiebers 5 ist ein Werkzeug 6, z.B. ein Fräser, zum Bearbeiten eines auf einen Maschinentisch 7 aufgespannten, nicht gezeigten Werkstücks angeordnet. Zur Verdeutlichung ist in Fig. 1 in starker Überzeichnung gestrichelt das Verformungsverhalten des Schiebers 5 hervorgehoben, wenn der Querbalken 3 mit einer hohen Beschleunigung beaufschlagt wird.

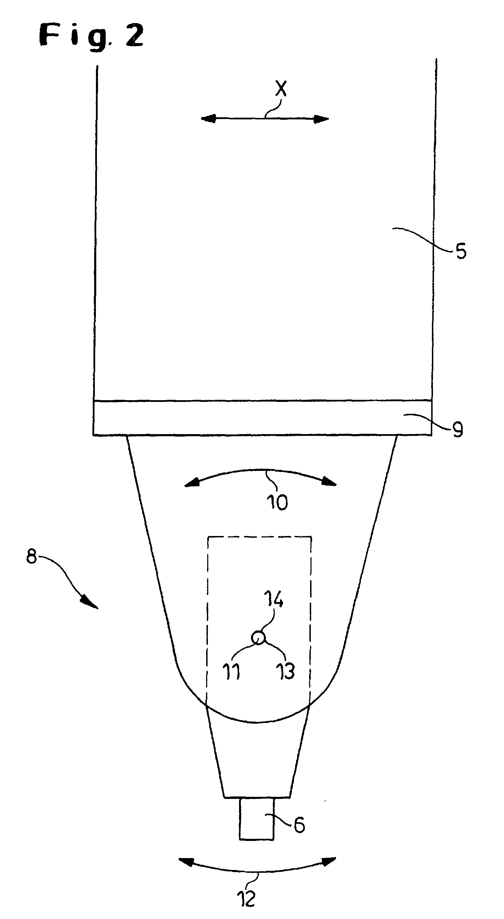

Diese Verformung wird vermieden, wenn der eine große Masse besitzende Querbalken nur mit kleinen Beschleunigungen verfahren und statt dessen dem Werkzeug 6 eine überlagerte Bewegung auferlegt wird, wie in Fig. 2 gezeigt. Das Werkzeug 6 ist zu diesem Zweck gemäß dem Ausführungsbeispiel in einer als Gabelkopf 8 ausgebildeten Werkzeug-Aufnahmeeinheit angeordnet. Der sich um eine Drehachse 9 gemäß Doppelpfeil 10 stets in die Hauptverfahrrichtung X verstellende Gabelkopf 8 ermöglicht es, in unmittelbarer Nähe des Werkzeuges 6 eine kleine Schwenkachse 11 mit Schwenkbewegungen in Richtung des Doppelpfeiles 12 mit einer nur geringen Masse bzw. einem kleinen Gewicht zu schaffen. Das Werkzeug 6 kann daher ohne ansonsten Ungenauigkeiten bei der Herstellung des zu bearbeitenden Werkstückes hervorrufenden Maschinenverformungen betrieben und mit einer überlagerten Bewegung beaufschlagt werden. Etwaige Störkräfte werden weiterhin dadurch minimiert, daß der Drehpunkt 13 des Werkzeugs 6 gleich dem Massenschwerpunkt 14 ist, wodurch auf den Schieber 5 keine Kraft aufgebaut wird.

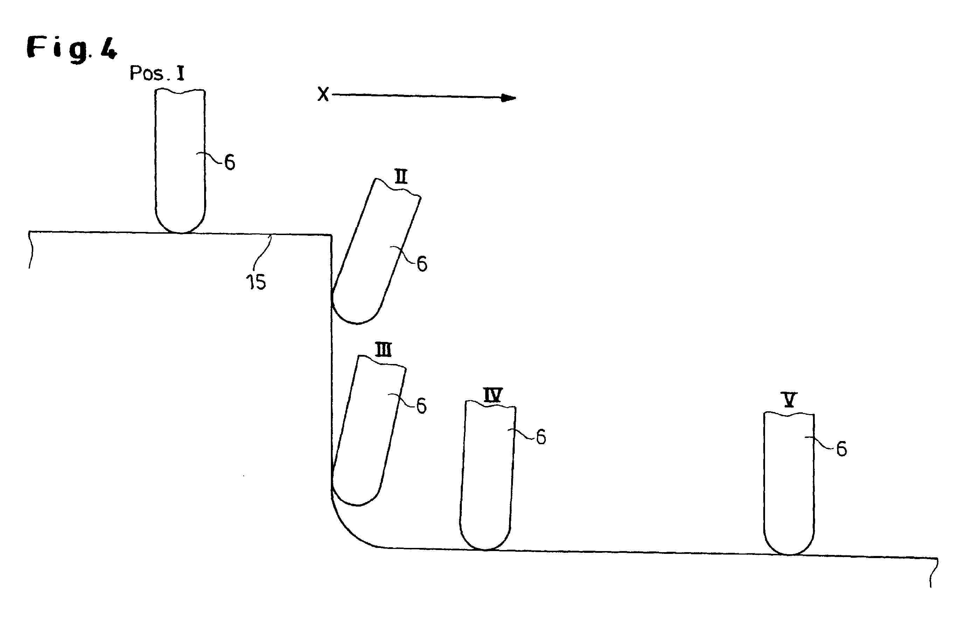

Anhand der Fig. 4 wird für verschiedene Betriebspositionen I bis V das Herausarbeiten einer Kontur bzw. Stufe in einem Werkstück 15 mit Überlagerung der Bewegung bei gewußt geringer Beschleunigung in Richtung der Hauptachse X (oder Y) erläutert. Bei Position I verfährt nur der Querbalken (vgl. Fig. 1) in X-Richtung. Bei Erreichen der Position II, d.h. mit dem Herausarbeiten der Kontur entsprechend einer vorgegebenen Maschinenbahn läuft X vor und über die Schwenkachse 9 wird dem Werkzeug 6 durch Bewegungsüberlagerung eine Korrektur auferlegt. Dies geschieht gleichermaßen in der Position III. Die Position IV läßt erkennen, daß nach der Fertigstellung der Kontur das sich um die Schwenkachse 11 verdrehende Werkzeug 6 die X-Hauptrichtungsbewegung nahezu bereits eingeholt hat; gemäß V ist der Korrekturvorgang durch Bewegungsüberlagerung abgeschlossen und es liegt bis zur Bearbeitung einer folgenden Kontur ein Bewegungsablauf wie unter I vor.

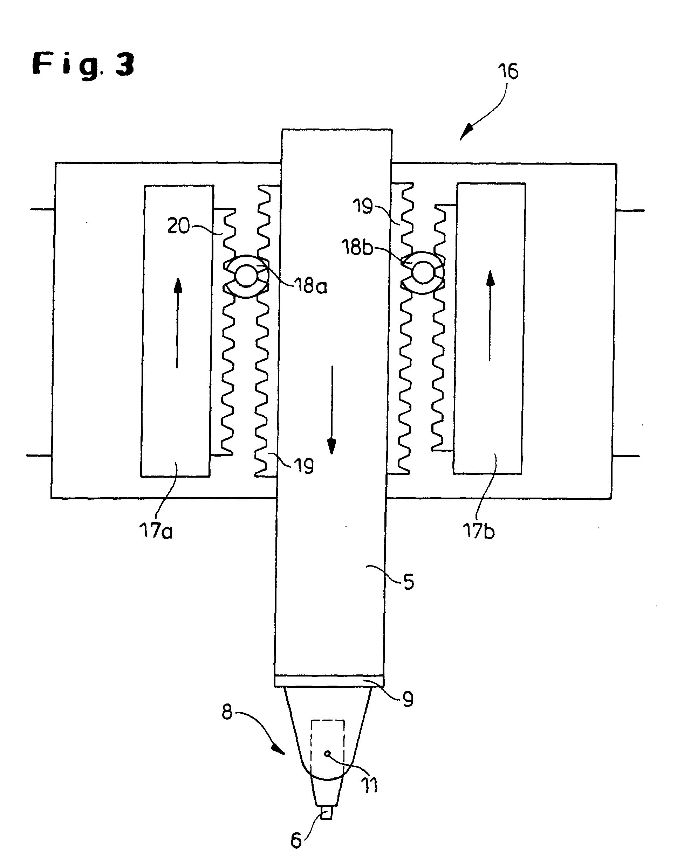

Um die Massenkräfte des senkrecht zu beschleunigenden Schiebers 5 auszuschalten, ist diesem gemäß Fig. 3 ein Gewichtsausgleich 16 zugeordnet. Dieser besteht aus zwei gegenläufig (vgl. die eingetragenen Pfeile) zu der jeweiligen Bewegungsrichtung des Schiebers 5 arbeitenden Ausgleichsmassen 17a, 17b. Diese sind über je mit nicht gezeigten Antrieben verbundene Ritzel 18a, 18b mit dem Schieber 5 gekoppelt, wobei die Ritzel 18a, 18b einerseits mit Zahnstangen 19 des Schiebers 5 und andererseits mit Zahnstangen 20 der Ausgleichsmassen 17a, 17b kämmen.

Die sich den senkrechten Beschleunigungen von Schieber 5 und Ausgleichsmassen 17a, 17b überlagernde Erdbeschleunigung läßt sich ausschalten, wenn diese Teile gewichtsentlastet sind. Dies kann durch nicht gezeigte Pneumatikzylinder (zwei für den Schieber 5 und jeweils einer für jede Ausgleichsmasse 17a bzw. 17b) erreicht werden. Bei dieser Anordnung entsteht kein zusätzlicher Medienbedarf, wenn die Pneumatikzylinder des Schiebers 5 gegenläufig zu den Pneumatikzylindern der Ausgleichsmassen 17a, 17b arbeiten.

## Patentansprüche

1. Werkzeugmaschine, insbesondere Hochgeschwindigkeits-Bearbeitungszentrum, zum spanabhebenden Bearbeiten von Werkstücken, insbesondere zum Fräsen von Konturen, umfassend einen X-Richtung hin und her verfahrbaren Querbalken, einen von diesem getragenen, in Y-Richtung quer dazu verfahrbaren Schlitten und einen in dem Schlitten in Z-Richtung, d.h. senkrecht auf- und abbeweglichen Schieber, der an seinem unteren Ende mit dem Werkzeug bestückt ist,
**dadurch gekennzeichnet,**
**daß** das Werkzeug (6) verschwenkbar in einer sich um eine Drehachse (9) in Hauptverfahrrichtung (X-Richtung) verstellenden Aufnahmeeinheit (8) mit seinem Schwerpunkt (14) im Drehpunkt (13) seiner Schwenkachse (11) liegend angeordnet ist.

2. Werkzeugmaschine nach Anspruch 1,
**gekennzeichnet durch**
einen Gabelkopf (8) als Werkzeug-Aufnahmeeinheit.

3. Werkzeugmaschine nach Anspruch 1 oder 2,
**dadurch gekennzeichnet,**
**daß** dem senkrecht zu beschleunigenden Schieber (5) ein Gewichtsausgleich (16) zugeordnet ist.

4. Werkzeugmaschine nach Anspruch 3,
**dadurch gekennzeichnet,**
**daß** der Gewichtsausgleich (16) aus zwei gegenläufig zu den Schieberbewegungen arbeitenden, jeweils das halbe Gewicht des Schiebers (5) besitzenden Ausgleichsmassen (17a, 17b) besteht.

5. Werkzeugmaschine nach Anspruch 3 oder 4,
**dadurch gekennzeichnet,**
**daß** die Ausgleichsmassen (17a, 17b) mit je einem Antriebsritzel (18a, 18b) des Schiebers (5) kämmen.

6. Werkzeugmaschine nach einem der Ansprüche 3 bis 5,
**dadurch gekennzeichnet,**
**daß** der Schieber (5) und die Ausgleichsmassen (17a, 17b) pneumatisch gewichtsentlastet sind.
